# EUROPEAN PATENT APPLICATION

(11) **EP 2 468 490 A1**
(43) Date of publication of application: **27.06.2012**
(21) Application number: 11193273.7
(22) Date of filing: 13.12.2011
(51) Int. Cl.: B29D 30/38, B60C 19/08

(54) **Manufacturing method of a pneumatic tire and pneumatic tire obtained thereby.**

(30) Priority: 21.12.2010 JP 2010284689
(71) Applicant: Toyo Tire & Rubber Co. Ltd., Osaka-shi, Osaka 550-8661 (JP)
(72) Inventor: Nishitani, Kazuma, Osaka-shi, Osaka 550-8661 (JP)
(74) Representative: Sajda, Wolf E.

(57) **Abstract**

A manufacturing method of a pneumatic tire in which a tread rubber (10) formed by a nonconductive rubber is arranged in a tread portion (3), and a conductive portion (13) which is formed by a conductive rubber and reaches a carcass layer (7) or a belt layer (6) from a ground surface is buried in the tread rubber (10), wherein a step of forming the carcass layer (7) includes a step of forming a strip-like carcass ply (20) by coating a plurality of carcass cords (21) which are arranged in parallel, with a topping rubber (22) constructed by a nonconductive rubber portion (22a) which is along an extending direction of the carcass cord (21), and a conductive rubber portion (22b) which is narrower than the nonconductive rubber portion (22a), and a step of lining up a lot of the strip-like carcass plies (20) in a ply width direction so as to bond the strip-like carcass plies (20) sequentially.

## Description

### BACKGROUND OF THE INVENTION

### Field of the Invention

The present invention relates to a manufacturing method of a pneumatic tire which can discharge a static electricity generated in a vehicle body or a tire to a road surface, and a pneumatic tire.

### Description of the Related Art

In recent years, aiming at a reduction of a rolling resistance of a tire which has a deep relationship to a fuel consumption performance, there has been proposed a pneumatic tire in which a tread rubber is highly blended with a silica. However, in the tread rubber mentioned above, since an electric resistance is higher in comparison with one which is blended with a carbon black highly, and a discharge of static electricity generated in a vehicle body and a tire to a road surface is obstructed, there has been a problem that a trouble such as a radio noise or the like tends to be generated.

Accordingly, there has been developed a pneumatic tire structured such that a tread rubber constructed by a nonconductive rubber blended with a silica or the like is provided with a conductive portion constructed by a conductive rubber blended with a carbon black or the like, whereby a conductive performance can be achieved.
For example, in a pneumatic tire described in Japanese Unexamined Patent Application Publication JP-A-2009-126291 and WO2009/066605, a nonconductive tread rubber is provided with a conductive portion which extends to an inner side in a tire radial direction from a ground surface and extends in a tire width direction between a gap portion and a base portion so as to be connected to a side wall rubber, thereby forming a conduction route for discharging static electricity.

However, in the pneumatic tire of Japanese Unexamined Patent Application Publication JP-A-2009-126291 and WO2009/066605, in the case that the side wall rubber is formed by a nonconductive rubber, it is necessary to connect the conductive portion to a carcass layer and a belt layer so as to discharge; however, if the topping rubber constructing the carcass layer and the belt layer is all formed by the nonconductive rubber, a conductive performance can not be achieved. Further, in order to enhance an improving effect by forming the tread rubber with the nonconductive rubber, it is desirable to make the volume of the conductive rubber in the carcass layer and the belt layer as small as possible.

### SUMMARY OF THE INVENTION

The present invention has been made by taking the actual circumstances mentioned above into consideration, and an object of the present invention is to provide a manufacturing method of a pneumatic tire which can reduce the volume of a conductive rubber while maintaining a good conductive performance, and a pneumatic tire having suitable conductive properties.

The object can be achieved by the following present invention. That is, the present invention provides a manufacturing method of a pneumatic tire in which a tread rubber formed by a nonconductive rubber is arranged in a tread portion, and a conductive portion, which is formed by a conductive rubber and reaches a carcass layer or a belt layer from a ground surface, is buried in the tread rubber, wherein
a step of forming the carcass layer includes a step of forming a strip-like carcass ply by coating a plurality of carcass cords which are arranged in parallel, with a topping rubber constructed by a nonconductive rubber portion which is provided along an extending direction of the carcass cord, and a conductive rubber portion which is narrower than the nonconductive rubber portion, and a step of lining up a plurality of the strip-like carcass plies in a ply width direction so as to bond the strip-like carcass plies sequentially.

In accordance with the present invention, since the strip-like carcass ply is formed by coating the carcass cord with the topping rubber constructed by the nonconductive rubber portion and the conductive rubber portion, the carcass layer can be conductive, and it is possible to discharge the static electricity generated in the vehicle body and the tire to the road surface, through the carcass layer and the conductive portion which is buried in the tread rubber.
Further, since the strip-like carcass ply is formed by coating the carcass cord with the nonconductive rubber portion and the conductive rubber portion which is narrower than the nonconductive rubber portion, it is possible to reduce the volume of the conductive rubber while maintaining the conductive performance.

In the manufacturing method of the pneumatic tire in accordance with the present invention, it is preferable that the strip-like carcass ply is formed by coating a center portion in the ply width direction with the nonconductive rubber portion and coating both end portions in the ply width direction with the conductive rubber portion, and end portions of the strip-like carcass plies which are lined up in the ply width direction are confronted with each other so as to be bonded.

In accordance with the manufacturing method mentioned above, the bonding performance is improved by forming both end portions of the strip-like carcass ply by the conductive rubber at a time of confronting the end portions of the strip-like carcass plies which are lined up in the ply width direction to each other so as to be bonded, and the bonding strength becomes higher.

Moreover the present invention provides a manufacturing method of a pneumatic tire in which a tread rubber formed by a nonconductive rubber is arranged in a tread portion, and a conductive portion, which is formed by a conductive rubber and reaches a belt layer from a ground surface, is buried in the tread rubber, wherein
a step of forming the belt layer includes a step of forming a strip-like belt ply by coating a plurality of belt cords which are arranged in parallel, with a topping rubber constructed by a nonconductive rubber portion which is provided along an extending direction of the belt cord, and a conductive rubber portion which is narrower than the nonconductive rubber portion, and a step of lining up a plurality of the strip-like belt plies in a ply width direction so as to bond the strip-like belt plies sequentially.

In accordance with the present invention, since the strip-like belt ply is formed by coating the belt cord with the topping rubber constructed by the nonconductive rubber portion and the conductive rubber portion, the belt layer can be conductive, and it is possible to discharge the static electricity generated in the vehicle body and the tire to the road surface through the belt layer and the conductive portion which is buried in the tread rubber.
Further, since the strip-like belt ply is formed by coating the belt cord with the nonconductive rubber portion and the conductive rubber portion which is narrower than the nonconductive rubber portion, it is possible to reduce the volume of the conductive rubber while maintaining the conductive performance.

In the manufacturing method of the pneumatic tire in accordance with the present invention, it is preferable that the strip-like belt ply is formed by coating a center portion in the ply width direction with the nonconductive rubber portion and coating both end portions in the ply width direction with the conductive rubber portion, wherein an end portion of one of the strip-like belt plies which are lined up in the ply width direction is superimposed on an end portion of another so as to be bonded.

In accordance with the manufacturing method mentioned above, if the end portion of one of the strip-like belt plies which are lined up in the ply width direction is superimposed on the end portion of another so as to be bonded, the bonded portion becomes a little thicker in comparison with the center portion in the ply width direction. Accordingly, it tends to come into contact with the carcass layer, and it is easy to secure the conductive performance by forming both end portions of the strip-like belt ply by the conductive rubber.

On the other hand, the present invention provides a pneumatic tire comprising:
- a pair of bead portions;
- side wall portions each of which extends to an outer side in a tire radial direction from the bead portion;
- a tread portion which is connected to an outer end in the tire radial direction of each of the side wall portions;
- a carcass layer which is arranged between the pair of bead portions;
   and
- a belt layer which is arranged in an outer circumferential side of the tread portion of the carcass layer,
wherein a tread rubber formed by a nonconductive rubber is arranged in the tread portion, and a conductive portion, which is formed by a conductive rubber and reaches the carcass layer or the belt layer from a ground surface, is buried in the tread rubber,
wherein in the carcass layer, a plurality of strip-like carcass plies formed by coating a plurality of carcass cords arranged in parallel with a topping rubber are lined up in a ply width direction so as to be bonded to each other, and
wherein the topping rubber is formed by a nonconductive rubber portion which extends along an extending direction of the carcass cord, and a conductive rubber portion which is narrower than the nonconductive rubber portion.

In accordance with the present invention, since the strip-like carcass ply is formed by coating the carcass cord with the topping rubber constructed by the nonconductive rubber portion and the conductive rubber portion, the carcass layer can be conductive, and it is possible to discharge the static electricity generated in the vehicle body and the tire to the road surface through the carcass layer and the conductive portion which is buried in the tread rubber.
Further, since the strip-like carcass ply is formed by coating the carcass cord with the nonconductive rubber portion and the conductive rubber portion which is narrower than the nonconductive rubber portion, it is possible to reduce the volume of the conductive rubber while maintaining the conductive performance.

Moreover the present invention provides a pneumatic tire comprising:
- a pair of bead portions;
- side wall portions each of which extends to an outer side in a tire radial direction from the bead portion;
- a tread portion which is connected to an outer end in the tire radial direction of each of the side wall portions;
- a carcass layer which is arranged between the pair of bead portions;
   and
- a belt layer which is arranged in an outer circumferential side of the tread portion of the carcass layer,
wherein a tread rubber formed by a nonconductive rubber is arranged in the tread portion, and a conductive portion, which is formed by a conductive rubber and reaches the belt layer from a ground surface, is buried in the tread rubber,
wherein in the belt layer, a plurality of strip-like belt plies formed by coating a plurality of belt cords arranged in parallel with a topping rubber are lined up in a ply width direction so as to be bonded to each other, and
wherein the topping rubber is formed by a nonconductive rubber portion which extends along an extending direction of the belt cord, and a conductive rubber portion which is narrower than the nonconductive rubber portion.

In accordance with the present invention, since the strip-like belt ply is formed by coating the belt cord with the topping rubber constructed by the nonconductive rubber portion and the conductive rubber portion, the belt layer can be conductive, and it is possible to discharge the static electricity generated in the vehicle body and the tire to the road surface through the belt layer and the conductive portion which is buried in the tread rubber.
Further, since the strip-like belt ply is formed by coating the belt cord with the nonconductive rubber portion and the conductive rubber portion which is narrower than the nonconductive rubber portion, it is possible to reduce the volume of the conductive rubber while maintaining the conductive performance.

### BRIEF DESCRIPTION OF THE DRAWINGS

- FIG. 1: is a cross sectional view of a tire meridian showing one example of a pneumatic tire in accordance with the present invention;
- FIG. 2: is a plan view showing a structure of a carcass layer;
- FIG. 3: is a plan view showing a structure of a belt layer;
- FIG. 4: is an explanatory view schematically showing an apparatus for manufacturing a carcass ply;
- FIG. 5: is a view of an outline structure of a forming apparatus of a band-like carcass ply;
- FIG. 6: is a cross sectional view showing a strip-like carcass ply and a bonded portion;
- FIG. 7: is an explanatory view schematically showing an apparatus for manufacturing a belt ply;
- FIG. 8: is a cross sectional view showing a strip-like belt ply and a bonded portion; and
- Figs. 9A to 9D: are cross sectional views schematically showing a forming step of a tread rubber.

### DETAILED DESCRIPTION OF PREFERRED EMBODIMENTS

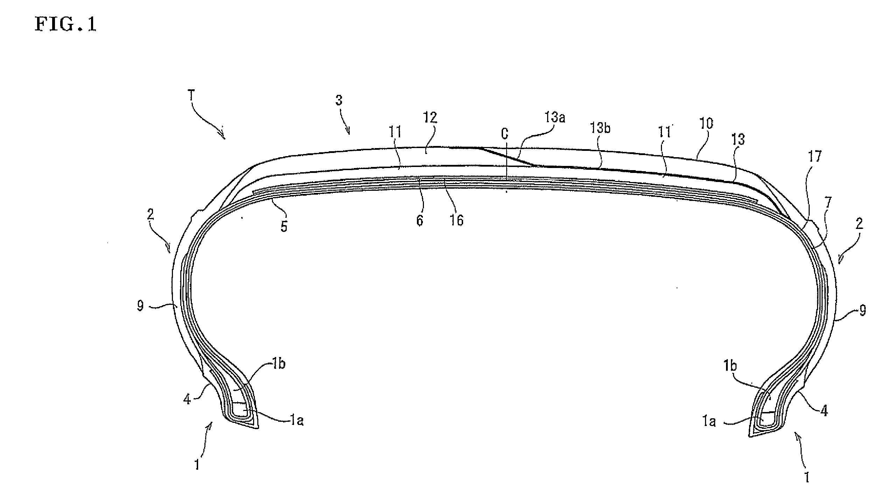

A description will be given below of an embodiment in accordance with the present invention with reference to the accompanying drawings. A pneumatic tire T shown in FIG. 1 is provided with a pair of bead portions 1, side wall portions 2 each of which extends to an outer side in a tire radial direction from the bead portion 1, a tread portion 3 which is connected to an outer end in the tire radial direction of each of the side wall portions 2, a carcass layer 7 which is arranged between a pair of bead portions 1, and a belt layer 6 which is arranged in an outer circumferential side of the tread portion 3 of the carcass layer 7.

In the bead portion 1, there are arranged an annular bead 1a formed by coating a convergence body such as a steel wire or the like with a rubber, and a bead filler 1b which is constructed by a hard rubber.

A toroidal carcass layer 7 is arranged between a pair of bead portions 1, and its end portion is locked in a state of being wound up via the bead 1a. The carcass layer 7 is constructed by at least one carcass ply 17 (two carcass plies in the present embodiment), and the carcass ply 17 is formed by coating a cord (a carcass cord) extending at an angle of approximately 90° with respect to a tire equator C with a topping rubber. An inner liner rubber 5 for maintaining a pneumatic pressure is arranged in an inner circumference of the carcass layer 7.

A rim strip rubber 4 coming into contact with a rim (not shown) is arranged in an outer circumference of the bead portion 1 of the carcass layer 7. Further, a side wall rubber 9 is arranged in an outer circumference of the side wall portion 2 of the carcass layer 7.

A belt layer 6 constructed by a plurality of (two in the present embodiment) belt plies 16 is arranged in an outer circumference of the tread portion 3 of the carcass layer 7. Each of the belt plies 16 is formed by coating a cord (a belt cord) which extends while sloping with respect to the tire equator C with a topping rubber, and is laminated in such a manner that the cord intersects inversely to each other between the plies.

A tread rubber 10 formed by a nonconductive rubber is arranged in the tread portion 3, and a conductive portion 13 which is formed by a conductive rubber and reaches the carcass layer 7 from a ground surface is buried in the tread rubber 10. The tread rubber 10 in accordance with the present embodiment is provided with a cap portion 12 which is formed by the nonconductive rubber and constructs the ground surface, and a base portion 11 which is formed by the nonconductive rubber and is bonded to an inner side in a tire radial direction of the cap portion 12. Further, the tire T employs a so-called side-on tread structure in which an end portion of the side wall rubber 9 is mounted on both end portions of the tread rubber 10; however, the tire T is not limited to this.

In this case, the conductive rubber indicates a rubber in which a specific volume resistance is less than 10⁸ Ohm·cm, and is manufactured, for example, by blending a carbon black serving as a reinforcing agent in a raw material rubber at a high rate. It can be also obtained by blending a carbon group known as conductivity applying material such as a carbon fiber, a graphite and the like, and a metal group known as conductivity applying material such as a metal powder, a metal oxide, a metal flake, a metal fiber and the like, in addition to the carbon black.
Further, the nonconductive rubber indicates a rubber in which the specific volume resistance is equal to or more than 10⁸ Ohm·cm, and can be manufactured, for example, by blending a silica serving as a reinforcing agent in the raw material rubber at a high rate.

In this tire T, since both the base portion 11 and the cap portion 12 are formed by the nonconductive rubber, it is possible to enhance an improving effect caused by forming the tread rubber 10 with the nonconductive rubber (an effect of reducing a rolling resistance and an effect of improving a braking performance on a wet road surface in the case of blending the silica highly).

The ground surface to which the conductive portion 13 is exposed indicates the surface of the tread portion grounding on the road surface at a time when the tire is put vertically on the flat road surface in a state of being assembled in a normal rim and being filled with a normal internal pressure, and a normal load is applied. The normal rim is a rim which is determined per tire by a standard system including a standard on which the tire is based, for example, is a standard rim in JATMA, "Design Rim" in TRA, or "Measuring Rim" in ETRTO.

The normal internal pressure is a pneumatic pressure determined per tire by a standard system including a standard on which the tire is based, and is a maximum pneumatic pressure in JATMA, a maximum value described in Table "TIRE LOAD LIMITS AT VARIOUS COLD INFLATION PRESSURES" in TRA, or "INFLATION PRESSURE" in ETRTO, however, in the case that the tire is for a passenger car, it is set to 180 kPa.
Further, the normal load is a load determined per tire by a standard system including a standard on which the tire is based, and is a maximum load capacity in JATMA, a maximum value described in Table mentioned above in TRA, or "LOAD CAPACITY" in ETRTO, however, in the case that the tire is for a passenger car, it is set to 85 % of a corresponding load to 180 kPa.

The conductive portion 13 has a first conductive portion 13a which extends to an inner side in the tire radial direction from the ground surface so as to reach an outer circumferential surface of the base portion 11, and a second conductive portion 13b which is provided continuously with the first conductive portion 13a and extends in a tire width direction (a right direction in FIG. 1 in the present embodiment) so as to reach a bottom surface of the tread rubber 10.
In the present embodiment, the first conductive portion 13a is exposed to the ground surface while sloping in the vicinity of the tire equator C, and is extended in its leading end portion in the tire width direction, thereby enhancing a freedom of a pattern design while securing an exposure frequency on the ground surface.

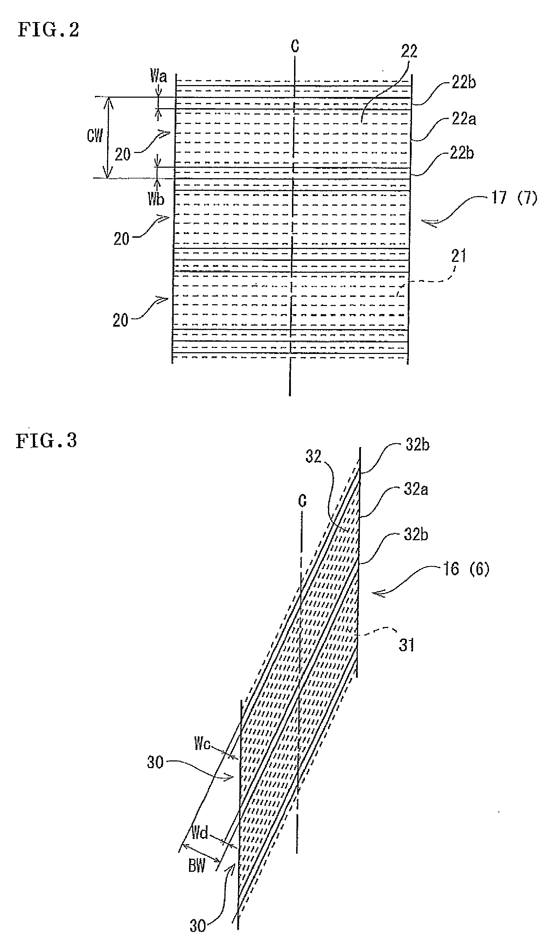

FIG. 2 is a view showing the carcass layer 7 in a plane view. The carcass layer 7 is constructed by at least one carcass ply 17, and the carcass ply 17 is structured such that a plurality of strip-like carcass plies 20 are lined up in a direction of a ply width CW so as to be bonded to each other. The strip-like carcass plies 20 are arranged in such a manner that a carcass cord 21 (shown by a broken line in FIG. 2) extends at an angle of approximately 90° with respect to the tire equator C. The ply width CW of the strip-like carcass ply 20 is, for example, between 200 and 450 mm.

The strip-like carcass ply 20 is constructed by coating a plurality of carcass cords 21 which are arranged in parallel, with a topping rubber 22. The topping rubber 22 is formed by a nonconductive rubber portion 22a and a conductive rubber portion 22b which is narrower than the nonconductive rubber portion 22a each of which extends along an extending direction of the carcass cord 21.

An arrangement of the nonconductive rubber portion 22a and the conductive rubber portion 22b is not particularly limited, however, it is preferable that a center portion in the direction of the ply width CW is set to the nonconductive rubber portion 22a, and both end portions in the direction of the ply width CW are set to the conductive rubber portion 22b. The joint between the strip-like carcass plies 20 is structured such as to enhance a bonding strength by confronting the end portions with each other and applying a zipper so as to crimp.
If the nonconductive rubber portion 22a has a low hardness, a bonding performance is not good in the case that both end portions are set to the nonconductive rubber portion 22a, however, the bonding performance becomes good by setting both end portions to the conductive rubber portion 22b, and the bonding strength becomes high.

It is preferable that the nonconductive rubber portion 22a and the conductive rubber portion 22b are arranged in such a manner that a width (Wa + Wb) of the conductive rubber portion 22b comes to 5 % to 20 % of the ply width CW. If the width (Wa + Wb) of the conductive rubber portion 22b is smaller than 5 % of the ply width CW, a stable conductive performance is hard to be obtained, and if it is larger than 20 %, there is a tendency that the volume reducing effect of the conductive rubber becomes small.

FIG. 3 is a view which shows the belt layer 6 in a plane. The belt layer 6 is constructed by a plurality of belt plies 16, and the belt plies 16 are bonded to each other by lining up a lot of strip-like belt plies 30 in a direction of a ply width BW. The strip-like belt plies 30 are arranged in such a manner that a belt cord 31 (shown by a broken line in FIG. 3) extends in a direction sloping at a predetermined angle (for example, 15° to 35°) with respect to the tire equator C. The ply width BW of the strip-like belt ply 30 is, for example, between 25 and 55 mm.

The strip-like belt ply 30 is formed by coating a plurality of belt cords 31 which are arranged in parallel with a topping rubber 32. The topping rubber 32 is constructed by a nonconductive rubber portion 32a and a conductive rubber portion 32b which is narrower than the nonconductive rubber portion 32a each of which extends along an extending direction of the belt cord 31.

An arrangement of the nonconductive rubber portion 32a and the conductive rubber portion 32b is not particularly limited, however, it is preferable that a center portion in the direction of the ply width BW is set to the nonconductive rubber portion 32a, and both end portions in the direction of the ply width BW are set to the conductive rubber portion 32b.
The joint between the strip-like belt plies 30 is structured such as to protrude a rubber slightly from both end edges so as to prepare a lug rubber portion, and superimpose and bond one lug rubber portion of the strip-like belt ply 30 lined up in the direction of the ply width BW on another lug rubber portion or a ply main body.
With this configuration, since the joint portion between the strip-like belt plies 30 becomes a little thicker in comparison with the center portion in the direction of the ply width BW, it tends to come into contact with the carcass layer 7, and it is easy to secure the conductive performance by setting the lug rubber portions in both end portions of the strip-like belt ply 30 to the conductive rubber portion 32b.

It is preferable that the nonconductive rubber portion 32a and the conductive rubber portion 32b are arranged in such a manner that a width (Wc + Wd) of the conductive rubber portion 32b comes to 5 % to 20 % of the ply width BW. If the width (Wc + Wd) of the conductive rubber portion 32b is smaller than 5 % of the ply width BW, a stable conductive performance is hard to be obtained, and if it is larger than 20 %, there is a tendency that the effect of reducing the volume of the conductive rubber becomes small.

In the present embodiment, the rim strip rubber 4 is formed by the conductive rubber, in addition to a part of the topping rubber 22 of the carcass ply 17, and a part of the topping rubber 32 of the belt ply 16. With this configuration, the static electricity generated in the vehicle body and the tire is discharged to the road surface through the conduction route via the rim, the rim strip rubber 4, the carcass layer 7 and the conductive portion 13. In this case, in the present embodiment, since the conductive portion 13 is connected to the carcass layer 7, the topping rubber 32 of the belt layer 6 may be all formed by the nonconductive rubber portion 32a.

The side wall rubber 9 can be formed by the conductive rubber or the nonconductive rubber, however, it is preferable that it is formed by the nonconductive rubber in the light of lowering a rolling resistance.

A description will be given briefly of an example of a method of manufacturing the pneumatic tire T, with reference to the accompanying drawings. The pneumatic tire T can be manufactured in the same manner as the conventional tire manufacturing step, except a point relating to the carcass ply 17 and the belt ply 16, which will be described below.

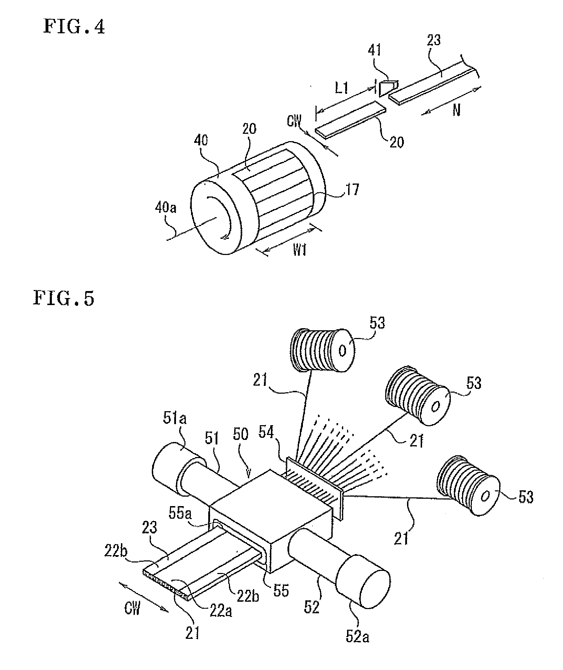

FIG. 4 is an explanatory view schematically showing an apparatus for manufacturing the carcass ply 17. The carcass ply 17 is manufactured by lining up a lot of strip-like carcass plies 20 in the direction of the ply width CW on a forming drum 40 and bonding the strip-like carcass plies 20 sequentially. The band-like carcass ply 23 is formed by coating with rubber a plurality of carcass cords 21 (not illustrated in FIG. 4) which are arranged in parallel, and the extending directions of the carcass cords 21 are aligned uniformly with a longitudinal direction N. The strip-like carcass ply 20 can be obtained by cutting a band-like carcass ply 23 at a predetermined length L1 with a cutter 41.

The band-like carcass ply 23 can be formed by using an apparatus, for example, as shown in FIG. 5. An extruding machine 50 is provided with a first cylinder 51 and a second cylinder 52 which incorporate screws, a first hopper 51a for introducing a rubber material of the nonconductive rubber portion 22a in the first cylinder 51, and a second hopper 52a for introducing a rubber material of the conductive rubber portion 22b in the second cylinder 52.
The rubber material introduced in the first cylinder 51 is fed to a leading end of the first cylinder 51 by a turning screw, and is fed in a die 55 so as to be extruded from an opening portion 55a. The rubber material introduced in the second cylinder 52 is fed to a leading end of the second cylinder 52 by a turning screw, and is fed in the die 55 so as to be extruded from the opening portion 55a.

A partition (not shown) is provided in an inner portion of the die 55, can guides the fed rubber material of the nonconductive rubber portion 22a to a center portion of the opening portion 55a, and can guide the fed rubber material of the conductive rubber portion 22b to both end portions of the opening portion 55a.

The carcass cord 21 is supplied to the extruding machine 50 from a lot of bobbins 53, a plurality of carcass cords 21 which are arranged in parallel by a positioning member 54 are coated with the rubber materials of the nonconductive rubber portion 22a and the conductive rubber portions 22b which are fed from the first cylinder 51 and the second cylinder 52, and the band-like carcass ply 23 having a predetermined cross sectional shape is extrusion molded via the die 55.

The band-like carcass ply 23 can be formed by a method of feeding a plurality of carcass cords which are arranged in parallel between a pair of calendar rolls and coating the carcass cords with a sheet-like rubber material which is formed by the calendar rolls, or a method of pinching a plurality of carcass cords which are arranged in parallel by rubber sheets which are superimposed up and down, in addition to the method of utilizing the extruding machine 50 as shown in FIG. 5.
Even in the case of forming the carcass ply 23 by utilizing the calendar rolls, by setting a partition between the rolls, it is possible to form the band-like carcass ply 23 in which the center portion in the direction of the ply width CW is coated with the nonconductive rubber portion 22a, and both end portions in the direction of the ply width CW are coated with the conductive rubber portion 22b.
In the apparatus according to FIG. 4, the band-like carcass ply 23 just after forming may be supplied, however, the formed band-like carcass ply 23 may be taken up temporarily like a roll shape, and may be supplied by rewinding the carcass ply 23 from the roll at a necessary time.

A length L1 of the strip-like carcass ply 20 is set to be the same as the width W1 of the carcass ply 17 which is necessary for forming the tire, and can be appropriately changed in accordance with a specification and a size of the tire to be manufactured. The strip-like carcass ply 20 is provided with the nonconductive rubber portion 22a which is positioned in the center portion in the direction of the ply width CW, and the conductive rubber portions 22b which are provided in both sides of the nonconductive rubber portion 22a, and the carcass cord 21 is buried in each of the nonconductive rubber portion 22a and the conductive rubber portion 22b.

A procedure for manufacturing the carcass ply 17 is as follows. First of all, the strip-like carcass plies 20 are obtained by cutting the long band-like carcass ply 23 at the length L1 with the cutter 41. Next, the strip-like carcass plies 20 are fed onto the forming drum 40 and are lined up in the direction of the ply width CW so as to be bonded sequentially. The strip-like carcass plies 20 are lined up in such a manner that the extending direction of the carcass cord 21 becomes approximately orthogonal to a tire circumferential direction.
The tire circumferential direction is the same direction as the circumferential direction of the forming drum 40. A lot of strip-like carcass plies 20 are bonded one after the other while turning the forming drum 40 around an axis 40a, and the cylindrical carcass ply 17 is formed in an outer circumference of the forming drum 40.

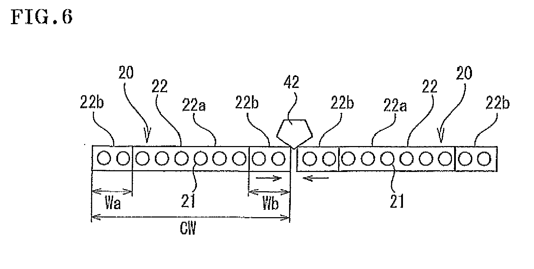

When bonding the strip-like carcass plies 20, a bonding strength is enhanced by confronting the conductive rubber portions 22b in both end portions of the strip-like carcass plies 20, which are adjacent to each other, with each other, and applying a zipper 42 thereto so as to crimp, as shown in FIG. 6. If the nonconductive rubber portion 22a has a low hardness, the bonding performance is not good in the case that both end portions are set to the nonconductive rubber portion 22a, however, the bonding performance becomes good by setting both end portions to the conductive rubber portion 22b, and the bonding strength becomes high.

After forming the carcass ply 17, the other tire construction members are sequentially supplied onto the forming drum 40. In the present embodiment, there is shown an example in which the strip-like carcass plies 20 are bonded on the forming drum 40, thereby forming the carcass ply 17 in a cylindrical shape, however, the sheet-like carcass ply 17 having a length corresponding to a tire circumferential length is formed by bonding the strip-like carcass plies 20 on a bonding base plate, for example, constructed by a drum or a conveyor, and is attached cylindrically onto the forming drum so as to be supplied to the tire forming.

As a material of the carcass cord 21 which is used in the carcass ply 17, there can be listed up an organic fiber cord such as a polyester, a rayon, a nylon, an aramid and the like, or a metal cord such as a steel and the like, and a twisting process is generally applied.

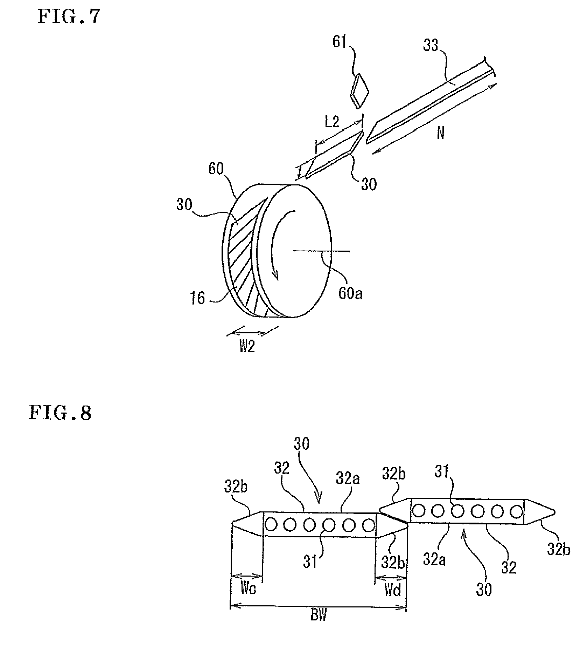

FIG. 7 is an explanatory view schematically showing an apparatus for manufacturing the belt ply 16. The strip-like belt plies 30 can be obtained by cutting a band-like belt ply 33 with a cutter 61 at a predetermined length L2, and are lined up in the direction of the ply width BW in such a manner that a belt cord 31 (not shown in FIG. 7) is sloped at a predetermined angle with respect to the tire circumferential direction. The band-like belt ply 33 can be formed in the same method as the band-like carcass ply 23 mentioned above.

The length L2 of the strip-like belt ply 30 is set in such a manner that the width W2 of the belt ply 16 which is necessary for forming the tire can be obtained at a time when the strip-like belt plies 30 are lined up in the direction of the ply width BW, and can be appropriately changed in accordance with a specification and a size of the tire to be manufactured. The strip-like belt ply 30 is provided with the nonconductive rubber portion 32a which is positioned in the center portion in the direction of the ply width BW, and the conductive rubber portions 32b which are positioned in both sides of the nonconductive rubber portion 32a, as shown in FIG. 8, and the belt cord 31 is buried in each of the nonconductive rubber portion 32a and the conductive rubber portion 32b.

A procedure for manufacturing the belt ply 16 is as follows. First of all, the strip-like belt plies 30 are obtained by cutting the long band-like belt ply 33 at the length L2 with the cutter 61. At this time, it is cut in such a manner that a cut surface becomes oblique with respect to a longitudinal direction N. Next, the strip-like belt plies 30 are fed onto the forming drum 60 and are lined up in the direction of the ply width BW so as to be bonded sequentially.
The strip-like belt plies 30 are lined up in such a manner that the extending direction of the belt cord 31 slants at a predetermined angle with respect to the tire circumferential direction. The belt ply 16 is formed cylindrically in an outer circumference of the forming drum 60 by bonding a lot of strip-like belt plies 30 one after the other while turning the forming drum 60 around the axis 60a.

At a time of bonding the strip-like belt plies 30, the conductive rubber portion 32b of one of the strip-like belt plies 30 which are adjacent to each other is superimposed on the conductive rubber portion 32b of another so as to be bonded. With this configuration, since the bonded portion between the strip-like belt plies 30 becomes a little thicker in comparison with the center portion in the direction of the ply width BW, it tends to come into contact with the carcass layer 7, and the conductive performance can be easily secured by setting both end portions of the strip-like belt ply 30 to the conductive rubber portion 32b.

After forming the belt ply 16, a cylindrical formed body is prepared by attaching the other tire constructing members constructing the tread rubber 10 and the like mentioned below. Further, a green tire is formed by feeding the cylindrical formed body to a different forming drum in which the carcass ply 17 and the like are arranged, and carrying out a predetermined work.
In the present embodiment, there is shown the example in which the strip-like belt ply 30 is bonded on the forming drum 60, thereby forming the belt ply 16 as the cylindrical shape, however, it may be formed as the cylindrical shape by bonding the strip-like belt plies 30 on a bonding base plate which is installed separately, forming the sheet-like belt ply 16 having a length corresponding to the tire circumferential length and attaching it to the forming drum.

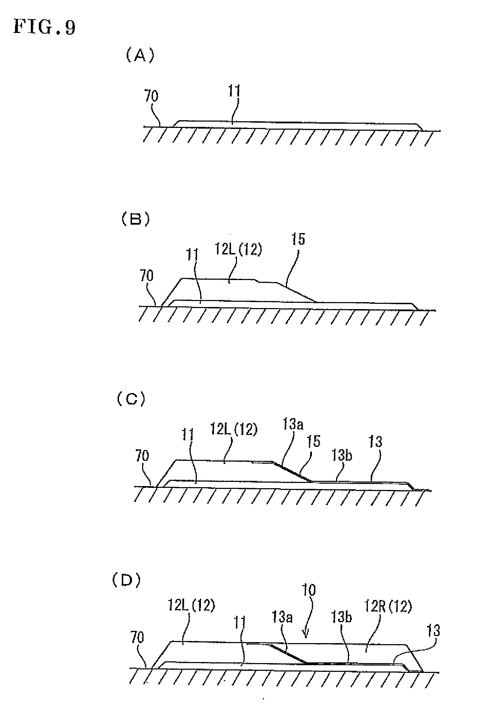

A description will be given briefly of the forming step of the tread rubber 10. First of all, as shown in FIG. 9A, the base portion 11 is formed by attaching the nonconductive rubber to a forming surface 70 which is constructed by an outer circumferential surface of the forming drum or the like. The formation of the base portion 11 can be carried out in accordance with an extrusion molding method or a ribbon winding construction method.
The extrusion molding method is a construction method of extrusion molding a band-like rubber member having a predetermined cross sectional shape and jointing end portions to each other so as to be formed in an annular shape, and the ribbon winding construction method is a construction method of forming a desired cross sectional shape by winding a rubber ribbon having a small width spirally in the tire circumferential direction.

Next, as shown in FIG. 9B, a half 12L of the cap portion 12 is formed by the nonconductive rubber. At this time, a slant face 15 for mounting the conductive portion 13 in the later step is formed. The formation of the cap portion 12 can be carried out in accordance with the extrusion molding method or the ribbon winding construction method.

Subsequently, as shown in FIG. 9C, the conductive portion 13 is formed by the conductive rubber. The conductive portion 13 extends in such a manner as to run into the bottom surface of the tread rubber 10 from the ground surface while passing above the slant face 15 and the base portion 11, the first conductive portion 13a is mounted on the slant face 15, and the second conductive portion 13b continued thereon is mounted on the base portion 11.
The formation of the conductive portion 13 is carried out by arranging the sheet-like rubber member or in accordance with the ribbon winding construction method, and they may be combined.

After forming the conductive portion 13, the tread rubber 10 can be obtained by forming the remaining half 12R of the cap portion 12 by the nonconductive rubber, as shown in FIG. 9D.

Although a description is omitted in FIG. 9, the belt layer 6 is arranged in an inner circumference of the tread rubber 10, and the pneumatic tire T shown in FIG. 1 can be manufactured by combining the tread rubber 10 with the other tire construction members such as the carcass layer 7, the side wall rubber 9 and the like. At this time, the conductive portion 13 buried in the tread rubber 10 is connected to the carcass layer 7. In the tire T manufactured as mentioned above, a vulcanization treatment is applied in a vulcanization molding step, and a tread pattern is provided in a surface of the tread rubber 10.

### Another Embodiment

In the embodiment mentioned above, the conductive portion 13 is connected to the carcass layer 7, however, the conductive portion 13 can be structured such as to be connected to the belt layer 6. Even in this case, it is possible to reduce the volume of the conductive rubber while maintaining the conductive performance, by setting the belt layer 6 to the structure mentioned above.

### Example

A description will be given below of an example which specifically shows the structure and the effect of the present invention. A size of a tire to be evaluated is 245/55R19, and the tire structure and the rubber composition are in common in each of the examples, except the structures of the carcass layer and the belt layer which are described below.

Items of evaluation are as follows.
Conductive performance: An electric resistance value was measured by applying a predetermined load to a tire which was installed to a rim, and applying an applied voltage (1000 V) to a metal plate on which a tire was grounded from a shaft supporting the rim. A threshold value was set to 100 MOhm, and the conductive performance was assumed to be present in a case that the electric resistance value is less than 100 MOhm, and be absent in a case that the electric resistance value goes beyond 100 MOhm.
Rolling resistance: A rolling resistance was measured by a rolling resistance testing machine. An evaluation was carried out by an index number on the assumption that a result of a Comparative Example 1 is set to 100, and the smaller numerical value indicates the smaller rolling resistance.

### Example I

In the tire of the structure shown in FIG. 1, a tire which was provided with the carcass ply as shown in FIG. 2 and the belt ply as shown in FIG. 3 was formed. In the strip-like carcass ply, the ply width was set to 300 mm, the nonconductive rubber was provided at a width of 285 mm in the center portion in the ply width direction, and the conductive rubber was provided at a width of 7.5 mm in each of both end portions in the ply width direction. In other words, the width of the conductive rubber was set to 5 % of a whole of the ply width in the strip-like carcass ply.
Further, in the strip-like belt ply, the ply width was set to 40 mm, the nonconductive rubber was provided at a with of 38 mm in the center portion in the ply width direction, and the conductive rubber was provided at a width of 1 mm in each of both end portions in the ply width direction. In other words, the width of the conductive rubber was set to 5 % of a whole of the ply width in the strip-like belt ply. The result of evaluation is shown in Table 1.

### Example 2

In the tire of the structure shown in FIG. 1, a tire which was provided with the carcass ply as shown in FIG. 2 and the belt ply as shown in FIG. 3 was formed. In the strip-like carcass ply, the ply width was set to 300 mm, the nonconductive rubber was provided at a width of 240 mm in the center portion in the ply width direction, and the conductive rubber was provided at a width of 30 mm in each of both end portions in the ply width direction.
In other words, the width of the conductive rubber was set to 20 % of a whole of the ply width in the strip-like carcass ply. Further, in the strip-like belt ply, the ply width was set to 40 mm, the nonconductive rubber was provided at a with of 32 mm in the center portion in the ply width direction, and the conductive rubber was provided at a width of 4 mm in each of both end portions in the ply width direction. In other words, the width of the conductive rubber was set to 20 % of a whole of the ply width in the strip-like belt ply. A result of evaluation is shown in Table 1.

### Example 3

In the tire of the structure shown in FIG. 1, a tire which was provided with the carcass ply as shown in FIG. 2 and the belt ply as shown in FIG. 3 was formed. In the strip-like carcass ply, the ply width was set to 300 mm, the nonconductive rubber was provided at a width of 150 mm in the center portion in the ply width direction, and the conductive rubber was provided at a width of 75 mm in each of both end portions in the ply width direction. In other words, the width of the conductive rubber was set to 50 % of a whole of the ply width in the strip-like carcass ply.
Further, in the strip-like belt ply, the ply width was set to 40 mm, the nonconductive rubber was provided at a with of 20 mm in the center portion in the ply width direction, and the conductive rubber was provided at a width of 10 mm in each of both end portions in the ply width direction. In other words, the width of the conductive rubber was set to 50 % of a whole of the ply width in the strip-like belt ply. A result of evaluation is shown in Table 1.

### Comparative Example 1

The Comparative Example 1 was the same as the Example 1 except the matter that the topping rubbers of the carcass ply and the belt ply are all formed by the nonconductive rubber. A result of evaluation is shown in Table 1.

**Table 1**

| | Width rate (carcass) | Width rate (belt) | Conductive performance | Rolling resistance |
|---|---|---|---|---|
| Comparative | 0% | 0% | Absent | 100 |
| Example 1 | | | | |
| Example 1 | 5% | 5% | Present | 100 |
| Example 2 | 20 % | 20% | Present | 101 |
| Example 3 | 50% | 50 % | Present | 103 |

In Table 1, the width rate (carcass) and the width rate (belt) mean rates of the width of the conductive rubber in the ply widths of the strip-like carcass ply and the strip-like belt ply. As shown in Table 1, since the conductivity is not provided in the strip-like carcass ply and the strip-like belt ply in the Comparative Example 1, the conductive performance is not achieved. In the Example 3, since the volume of the conductive rubber is large in spite that the conductive performance is provided, the rolling resistance is a little deteriorated. On the other hand, in the Examples 1 and 2, in accordance that the volume of the conductive portion can be reduced while maintaining the conductive performance, the rolling resistance is held down approximately the same as the Comparative Example 1.

### List of Reference Signs

- 1: = bead portion
- 1a: = annular bead
- 1b: = bead filler
- 2: = side wall portion
- 3: = tread portion
- 4: = rim strip rubber
- 5: = inner liner rubber
- 6: = belt layer
- 7: = carcass layer
- 9: = side wall rubber
- 10: = tread rubber
- 11: = base portion
- 12: = cap portion
- 12L: = half
- 12R: = half
- 13: = conductive portion
- 13a: = first conductive portion
- 13b: = second conductive portion
- 15: = slant face
- 16: = belt plies
- 17: = carcass ply
- 20: = strip-like carcass plies
- 21: = carcass cord
- 22: = topping rubber
- 22a: = nonconductive rubber portion
- 22b: = conductive rubber portion
- 23: = carcass ply
- 30: = strip-like belt plies
- 31: = belt cords
- 32: = topping rubber
- 32a: = nonconductive rubber portion
- 32b: = conductive rubber portion
- 40: = forming drum
- 40a: = axis
- 41: = cutter
- 42: = zipper
- 50: = extruding machine
- 51: = first cylinder
- 51a: = first hopper
- 52: = second cylinder
- 52a: = second hopper
- 53: = bobbins
- 54: = positioning member
- 55: = die
- 55a: = opening portion
- 60: = forming drum
- 60a: = axis
- 61: = cutter

## Claims

1. A manufacturing method of a pneumatic tire in which a tread rubber (10) formed by a nonconductive rubber is arranged in a tread portion (3), and a conductive portion, which is formed by a conductive rubber and reaches a carcass layer (7) or a belt layer (6) from a ground surface, is buried in the tread rubber (10),
wherein a step of forming the carcass layer (7) includes a step of forming a strip-like carcass ply (20) by coating a plurality of carcass cords (21) which are arranged in parallel, with a topping rubber (22) constructed by a nonconductive rubber portion (22a) which is along an extending direction of the carcass cord (21), and a conductive rubber portion (22b) which is narrower than the nonconductive rubber portion (22a), and a step of lining up a lot of the strip-like carcass plies (20) in a ply width direction so as to bond the strip-like carcass plies (20) sequentially,
or wherein a step of forming the belt layer (6) includes a step of forming a strip-like belt ply (30) by coating a plurality of belt cords (31) which are arranged in parallel, with a topping rubber (32) constructed by a nonconductive rubber portion (32a) which is along an extending direction of the belt cord (31), and a conductive rubber portion (32b) which is narrower than the nonconductive rubber portion (32a), and a step of lining up a lot of the strip-like belt plies (30) in a ply width direction so as to bond the strip-like belt plies (30) sequentially.

2. The manufacturing method according to claim 1,
wherein the strip-like carcass ply (20) is formed by coating a center portion in the ply width direction with the nonconductive rubber portion (22a) and coating both end portions in the ply width direction with the conductive rubber portion (22b), and end portions of the strip-like carcass plies (20) which are lined up in the ply width direction are confronted with each other so as to be bonded.

3. The manufacturing method according to claim 1,
wherein the strip-like belt ply (30) is formed by coating a center portion in the ply width direction with the nonconductive rubber portion (32a) and coating both end portions in the ply width direction with the conductive rubber portion (32b), and an end portion of one of the strip-like belt plies (30) which are lined up in the ply width direction is superimposed on an end portion of another so as to be bonded.

4. A pneumatic tire comprising:
- a pair of bead portions (1);
- side wall portions (2) each of which extends to an outer side in a tire radial direction from the bead portion (1);
- a tread portion (3) which is connected to an outer end in the tire radial direction of each of the side wall portions (2);
- a carcass layer (7) which is arranged between the pair of bead portions (1); and
- a belt layer (6) which is arranged in an outer circumferential
side of the tread portion of the carcass layer (7),
wherein a tread rubber (10) formed by a nonconductive rubber is arranged in the tread portion (3), and a conductive portion (13) which is formed by a conductive rubber and reaches the carcass layer (7) or the belt layer (6) from a ground surface is buried in the tread rubber (10), wherein in the carcass layer (7), a lot of strip-like carcass plies (20) formed by coating a plurality of carcass cords (21) arranged in parallel with a topping rubber (22) are lined up in a ply width direction so as to be bonded to each other, and
wherein the topping rubber (22) is formed by a nonconductive rubber portion (22a) which extends along an extending direction of the carcass cord (21), and a conductive rubber portion (22b) which is narrower than the nonconductive rubber portion (22a),
or wherein in the belt layer (6), a lot of strip-like belt plies (30) formed by coating a plurality of belt cords (31) arranged in parallel with a topping rubber (32) are lined up in a ply width direction so as to be bonded to each other, and
wherein the topping rubber (32) is formed by a nonconductive rubber portion (32a) which extends along an extending direction of the belt cord (31), and a conductive rubber portion (32b) which is narrower than the nonconductive rubber portion (32a).
